# EUROPÄISCHE PATENTANMELDUNG

(11) **EP 4 803 181 A1**
(43) Veröffentlichungstag der Anmeldung: **09.09.2026**
(21) Anmeldenummer: 26157403.2
(22) Anmeldetag: 10.02.2026
(51) Int. Cl.: B01D 69/02, B01D 53/22, B01D 69/04, B01D 71/02, C01B 3/503

(54) **VERFAHREN ZUR BEARBEITUNG EINER SEMIPERMEABLEN MEMBRAN AUS EINEM FÜR WASSERSTOFF DURCHLÄSSIGEN METALL**

(30) Priorität: 10.02.2025 DE 102025104742
(71) Anmelder: Mahnken, Claus-Lüder, 27367 Ahausen (DE); Lorenzen, Johannes Hinrich, 24966 Sörup OT Winderatt (DE)
(72) Erfinder: Mahnken, Claus-Lüder, 27367 Ahausen (DE)
(74) Vertreter: Kröncke, Rolf

(57) **Zusammenfassung**

Die vorliegende Erfindung betrifft zum einen ein Verfahren zur Bearbeitung einer semipermeablen Membran aus einem für Wasserstoff durchlässigen Eisen oder aus einer für Wasserstoff durchlässigen eisenhaltigen Metalllegierung, zur Gewinnung von hochreinem Wasserstoff aus einem Rohgas. Zum anderen betrifft die Erfindung eine semipermeable Membran erhältlich gemäß dem erfindungsgemäßen Verfahren. Außerdem betrifft die Erfindung die Verwendung einer solchen erfindungsgemäßen semipermeablen Membran zur Gewinnung von hochreinem Wasserstoff sowie ein Verfahren zur Gewinnung von hochreinem Wasserstoff unter Verwendung einer erfindungsgemäßen semipermeablen Membran. Schließlich betrifft die Erfindung eine Vorrichtung zur Gewinnung von hochreinem Wasserstoff aus einem Rohgas.

## Beschreibung

Die vorliegende Erfindung betrifft zum einen ein Verfahren zur Bearbeitung einer semipermeablen Membran aus einem für Wasserstoff durchlässigen Eisen oder aus einer für Wasserstoff durchlässigen eisenhaltigen Metalllegierung, zur Gewinnung von hochreinem Wasserstoff aus einem Rohgas. Zum anderen betrifft die Erfindung eine semipermeable Membran erhältlich gemäß dem erfindungsgemäßen Verfahren. Außerdem betrifft die Erfindung die Verwendung einer solchen erfindungsgemäßen semipermeablen Membran zur Gewinnung von hochreinem Wasserstoff sowie ein Verfahren zur Gewinnung von hochreinem Wasserstoff unter Verwendung einer erfindungsgemäßen semipermeablen Membran. Schließlich betrifft die Erfindung eine Vorrichtung zur Gewinnung von hochreinem Wasserstoff aus einem Rohgas mit einer erfindungsgemäßen semipermeablen Membran.

### Stand der Technik

Wasserstoff findet als Industriegas vielfältige Anwendungsmöglichkeiten in der Chemie- und Metall-Industrie. Auch die Bedeutung von Wasserstoff als Zwischenspeicher von überschüssiger elektrischer Energie aus erneuerbaren Energiequellen gewinnt immer mehr an Bedeutung.

Besonders interessant ist dabei hochreiner, Wasserstoff, da dieser leicht weiterzuverarbeiten ist und eine hohe Energiedichte aufweist. Gängige Methoden zur Gewinnung von hochreinem Wasserstoff beruhen überwiegend auf Kryotechnik oder der Elektrolyse von Wasser und sind sehr energieaufwendig.

Wasserstoff ist Bestandteil von Pyrolysegasen aus unvollständigen Verbrennungsprozessen. Weitere Bestandteile sind unter anderem Kohlenstoffmonoxid und -dioxid, Wasserdampf und Methan. Dieser Wasserstoff ist von großem wirtschaftlichem Interesse, allerdings fehlen noch geeignete Verfahren, den Wasserstoff effektiv und in großem Maßstab aus Pyrolysegasen zu gewinnen. Dieser Wasserstoff wird derzeit mit dem Pyrolysegas ungenutzt in die Umwelt abgegeben.

Aus dem Stand der Technik sind Verfahren bekannt, um hochreinen Wasserstoff aus Gasgemischen, insbesondere aus Pyrolysegasen, zu gewinnen.

Die WO2011/050789 beschreibt ein Kleinkraftwerk, bei welchem eine Einrichtung zur Abscheidung von hochreinem Wasserstoff aus einem Pyrolysegas ein einen Innenraum umgebendes Gehäuse mit zumindest einer, im Gehäuse angeordneten, einen mit Pyrolysegas zumindest teilweise gefüllten Bereich abtrennenden semipermeablen Trennwand aufweist.

Die DE102012109154 und die DE 102010049792 A1 beschreiben Verfahren zur Gewinnung von hochreinem Wasserstoff aus einem Rohgas. Das Verfahren macht sich zu Nutze, dass ein semipermeables Material aus Metall mindestens zu Beginn des Verfahrens erwärmt wird, um die Menge an durchtretendem Wasserstoff zu erhöhen. In einer bevorzugten Ausführungsform wird ein elektrischer Strom durch das semipermeable Material zu Beginn des Verfahrens geleitet. In einer weiteren bevorzugten Ausführungsform wird das semipermeable Material auf eine Temperatur von 400°C bis 800°C erwärmt.

Es wurde beobachtet, dass sich die Durchtrittsrate des Wasserstoffs durch das semipermeable Material nach mehrmaliger Anwendung des Verfahrens verringert und so der Wirkungsgrad des Verfahrens abnimmt.

Aufgabe der vorliegenden Erfindung ist es eine verbesserte semipermeable Membran zur Verwendung in einem Verfahren zur Gewinnung von hochreinem Wasserstoff bereitzustellen, die eine gleichbleibend hohe Durchtrittsrate von Wasserstoff aufweist, beziehungsweise eine Durchtrittsrate die weniger stark abnimmt.

### Beschreibung der Erfindung

Die Aufgabe wird gelöst durch die Bereitstellung des erfindungsgemäßen Verfahrens zur Bearbeitung einer semipermeablen Membran aus einem für Wasserstoff durchlässigen Eisen oder aus einer für Wasserstoff durchlässigen eisenhaltigen Metalllegierung, zur Gewinnung von hochreinem Wasserstoff aus einem Rohgas umfassend die Schritte:
a. Bereitstellen einer semipermeablen Membran aus einem für Wasserstoff durchlässigen Eisen oder aus einer für Wasserstoff durchlässigen eisenhaltigen Metalllegierung;
b. Strukturieren der Oberfläche der semipermeablen Membran mit einem materialabtragenden Verfahren, insbesondere ein Ätzverfahren.

Unter "semipermeabler Membran" im Sinne dieser Erfindung, ist eine Membran zu verstehen, die für spezifische Stoffe durchlässig permeabel ist und für andere spezifische Stoffe undurchlässig ist. Man kann auch sagen, dass die Membran selektiv für einen ersten Stoff durchlässig ist und selektiv für einen zweiten Stoff nicht durchlässig ist. Der Stoff kann ein Gas sein und das Stoffgemisch kann ein Gasgemisch sein. Eine semipermeable Membran kann somit für einen ersten gasförmigen Stoff durchlässig sein und für einen zweiten gasförmigen Stoff undurchlässig sein. Eine semipermeable Membran kann auch nur für einen einzelnen ersten gasförmigen Stoff aus einem Gasgemisch durchlässig sein und für alle anderen gasförmigen Stoffe aus einem Gasgemisch nicht durchlässig sein.

Membranen aus für Wasserstoff durchlässigem Eisen oder aus einer für Wasserstoff durchlässigen eisenhaltigen Metalllegierung sind dem Fachmann bekannt. Geeignete eisenhaltige Metalllegierungen, enthalten im wesentlichen Eisen und weitere Metalle in geringen Mengen bis zu 5 Masseprozent.

Unter dem Begriff "Rohgas" im Sinne diese Erfindung ist ein Gasgemisch aus Wasserstoff und mindestens einem zweiten Gas zu verstehen. Das Gasgemisch kann auch eine Vielzahl weiterer Gase neben dem Wasserstoff enthalten. Es ist auch möglich, dass das Gasgemisch ein Aerosol enthält. Mögliche Aerosolpartikel können dabei Wasserdampf, Ruß oder Flugasche sein. In einer Ausführungsform ist das Rohgas ein Pyrolysegas aus einem unvollständigen Verbrennungsprozess. Ein derartiges Pyrolysegas kann zum Beispiel bei der unterstöchiometrischen Verbrennung von organischem Material, wie Holzpellets, entstehen. Die wesentlichen Bestandteile eines solchen Pyrolysegases sind Wasserdampf, Wasserstoff, Kohlenstoffmonoxid und -dioxid, sowie Methan. Darüber hinaus kann das Pyrolysegas andere Bestandteile, wie teerartige, ölige und/oder fettige Stoffe enthalten.

In einer Ausführungsform ist das Rohgas ein reformiertes Synthesegas. Ein reformiertes Synthesegas kann durch mindestens eine Reformierungsreaktion, wie mindestens eine Dampfreformierungsreaktion, aus einem Gasgemisch, wie einem Pyrolysegas, hergestellt werden. Bestandteile eines reformierten Synthesegases können Methan, Wasserstoff, Kohlenstoffdioxid, Kohlenstoffmonooxid, und Wasserdampf sein. Durch die Reformierungsreaktion können Bestandteile des Gasgemisches die kein Kohlenstoffdioxid, Methan, Kohlenstoffmonooxid, Wasserstoff oder Wasserdampf sind, in mindestens einen dieser Stoffe umgewandelt werden. Dem Fachmann sind Methoden zur Reformierung von Gasgemischen bekannt.

In einer Ausführungsform ist das Rohgas ein Gasgemisch aus natürlichem Erdgas und Wasserstoff im Gasnetz der Energieversorgung. Dem Fachmann ist die Zusammensetzung von Erdgas bekannt. Ein Gasgemisch aus Erdgas und Wasserstoff entsteht zum Beispiel, wenn dem Erdgas des Gasnetzes der Energieversorgung Wasserstoff beigemischt wird. Der Wasserstoff kann dabei sogenannter "grüner" Wasserstoff sein, der als Energiespeicher von durch regenerative Energiequellen erzeugter Energie dient. Der Wasserstoff kann so mit dem Erdgas im Gasnetz der Energieversorgung transportiert werden.

Unter "hochreiner Wasserstoff" im Sinne dieser Erfindung, ist Wasserstoff mit einem hohen Reinheitsgrad zu verstehen. Dem Fachmann sind diverse Methoden bekannt die Reinheit eines Gases, wie von Wasserstoff, zu beschreiben. Hochreiner Wasserstoff im Sinne dieser Erfindung weist einen Reinheitsgrad von mindestens 99,99% auf. Hochreiner Wasserstoff kann einen geringen Rest eines anderen Stoffes enthalten. Bei dem anderen Stoff kann es sich um ein Gas, eine Flüssigkeit oder um einen Feststoff handeln. Oft umfasst der Rest jedoch mindestens ein Gas. Der Rest kann auch aus einer Vielzahl von Stoffen bestehen. Es ist jedoch klar, dass die absolute Menge der Stoffe des Restes im Vergleich zu der Menge des Wasserstoffes gering ist. Auch Wasserstoff, der einen Reinheitsgrad von 100% hat, fällt ist hochreiner Wasserstoff. Wasserstoff mit einem Reinheitsgrad von 100% weist keinen Rest eines anderen Stoffes auf.

Dem Fachmann sind materialabtragende Verfahren zur Bearbeitung von Metallteilen, wie Membranen aus Metall, insbesondere Eisen oder eisenhaltigen Metalllegierungen, bekannt. Ein geeignetes materialabtragendes Verfahren zum strukturieren der Oberfläche der Membran ist unter anderem das elektrolytische Ätzen mit Bestromung im Elektrolysebad. Das Funkenerodierverfahren ist eine weitere Methode, um oberflächliche Strukturen zu schaffen. In einem Bad mit einem nicht elektrisch leitfähigen, flüssigen Dielektrikum wird dabei eine Elektrode oberhalb der Oberfläche platziert und über eine CNC-Vorrichtung programmgemäß bewegt. Fräs-Verfahren, zum Beispiel CNC-Fräsen, oder Laser-Verfahren sind ebenfalls geeignet. Sandstrahlverfahren sind eine kostengünstige Möglichkeit für die Bearbeitung. Als Strahlmittel kommt neben Korund auch Quarzglas, aber auch Eisenpulver oder Eisengries infrage. Besonders geeignet sind jedoch Ätzverfahren. Ätzverfahren sind kostengünstig und einfach in großem Maßstab durchzuführen. Außerdem können leicht beide Oberflächen der Membran gleichzeitig in einem Arbeitsschritt bearbeitet werden.

Es wurde überraschend festgestellt, dass durch das erfindungsgemäße Verfahren zur Bearbeitung einer semipermeablen Membran, eine semipermeable Membran bereitgestellt wird, die insbesondere auch ohne eine anfängliche Bestromung und/oder eine anfängliche Erwärmung eine vergleichbar hohe Durchtrittsrate von Wasserstoff wie eine herkömmliche Membran nach dem Stand der Technik, die in einem Verfahren mit anfänglicher Bestromung und/oder anfänglicher Erwärmung nach dem Stand der Technik verwendet wird, aufweist. Es wird angenommen, dass durch die Strukturierung der Membran durch das materialabtragende Verfahren, die Durchtrittsdicke des Wasserstoffs durch die Membran sich vorteilhaft verringert und die Grenzfläche zwischen der Oberfläche der Membran und dem Rohgas in vorteilhafterweise sich erhöht. Es wurde weiterhin überraschend festgestellt, dass es auf einer Membran erhältlich gemäß dem erfindungsgemäßen Verfahren, insbesondere ohne die anfängliche Erwärmung und Bestromung, zu keinem oder einem geringeren Niederschlag von Ruß auf der dem Rohgas zugewandten Seite als bei einer nicht bearbeiteten Membran kommt, der in Verfahren nach dem Stand der Technik stets beobachtet wurde.

Es zeigte sich, dass die anfängliche Bestromung und/oder die anfängliche Erwärmung, wie im Stand der Technik zwingend erforderlich, zum Niederschlag von Ruß auf der Membran führt. Es wird vermutet, dass sich aufgrund der Temperaturentwicklung Bestandteile des Rohgases, wie zum Beispiel Methan und Kohlenstoffmonoxid, zersetzen und sich als Ruß auf die Membran niederschlagen. Es wurde erkannt, dass der Niederschlag von Ruß auf die Membran, die in Verfahren nach dem Stand der Technik stets beobachtet wurde, zu der eingangs erwähnten Verringerung der Durchtrittsrate des Wasserstoffs durch das semipermeable Material nach mehrmaliger Anwendung des Verfahrens zur Gewinnung von Wasserstoff und zu der Abnahme des Wirkungsgrads des Verfahrens führt. Es wurde weiterhin beobachtet, dass sich die Durchtrittsrate des Wasserstoffs durch die gemäß einem erfindungsgemäßen Verfahren erhältliche Membran durch eine anfängliche Bestromung und/oder eine anfängliche Erwärmung erhöht. Dabei wurde jedoch festgestellt, dass die gegebenenfalls notwendige anfängliche Bestromung und/oder die anfängliche Erwärmung im Vergleich zu Verfahren nach dem Stand der Technik stark verkürzt werden kann. Es zeigte sich, dass sich auch bei der stark verkürzten anfänglichen Bestromung und/oder anfänglichen Erwärmung, kein Ruß auf der Membran niederschlägt. Dies könnte daran liegen, dass die im Vergleich zum Stand der Technik stark verkürzte anfängliche Bestromung und/oder anfängliche Erwärmung nicht ausreicht, damit sich Bestandteile des Rohgases zersetzen und als Ruß sich auf der Membran niederschlagen.

In einer Ausführungsform des erfindungsgemäßen Verfahrens zur Bearbeitung einer semipermeablen Membran umfasst das für Wasserstoff durchlässige Eisen oder die eisenhaltige Metalllegierung Roheisen, bevorzugt ferritisches Eisen. **In** einer Ausführungsform ist das Eisen Reineisen. Es hat sich gezeigt, dass ein besonders hoher Eisenanteil vorteilhaft für die Durchtrittsrate des Wasserstoffs durch die Membran ist. Reineisen weist einen Eisenanteil von mehr als 99,8 %, wie einen Eisenanteil von mehr als 99,999999%, auf. Reineisen, sowie der Durchtritt von Wasserstoff durch eine Membran aus Reineisen, sind dem Fachmann bekannt.

In einer Ausführungsform des erfindungsgemäßen Verfahrens zur Bearbeitung einer semipermeablen Membran besteht das für Wasserstoff durchlässige Metall aus Roheisen, bevorzugt aus ferritischem Eisen. In einer Ausführungsform besteht das Metall aus Reineisen. Eine Membran, bestehend aus Reineisen, weist einen besonders hohen Eisengehalt, im Vergleich zu einer Membran umfassend Roheisen oder ferritisches Eisen oder zu einer Membran bestehend aus Roheisen oder ferritischem Eisen, auf.

Eine semipermeable Membran aus einer eisenhaltigen Metalllegierung ist bevorzugt eine mit einem möglichst hohen Eisenanteil, wie mindestens 95 Masseprozent, wie 96, 97, 98 oder 99 Masseprozent.

In einer Ausführungsform des erfindungsgemäßen Verfahrens zur Bearbeitung einer semipermeablen Membran, wird die Membran einseitig durch das materialabtragende Verfahren strukturiert. Dies hat den Vorteil, dass eine Membran bereitgestellt wird, die eine hohe Durchtrittsrate des Wasserstoffs aufweist. In einer Ausführungsform wird die Membran einseitig auf der Oberfläche die eine Grenzfläche mit dem Rohgas bildet durch das materialabtragende Verfahren strukturiert. Dies hat den Vorteil, dass die Grenzfläche zwischen dem Rohgas und der Membran sich erhöht.

In einer Ausführungsform des erfindungsgemäßen Verfahrens zur Bearbeitung einer semipermeablen Membran umfasst das Verfahren den Schritt: Strukturieren der Oberfläche der semipermeablen Membran die eine Grenzfläche mit dem Rohgas bildet und der Oberfläche der semipermeablen Membran, die eine Grenzfläche mit dem hochreinen Wasserstoff bildet. Vorteilhaft daran ist, dass eine derart bearbeitete Membran eine noch weiter erhöhte Durchtrittsrate des Wasserstoffs aufweist. Dies könnte daran liegen, dass die Durchtrittsdicke für den Wasserstoff sich noch weiter verringert hat und gleichzeitig die Oberfläche, die in Kontakt mit dem Rohgas steht, sich stark erhöht.

In einer Ausführungsform des erfindungsgemäßen Verfahrens zur Bearbeitung einer semipermeablen Membran ist das materialabtragende Verfahren ein Ätzverfahren. Bei einem Ätzverfahren wird sich die korrosive Wirkung eines Ätzmittels, auf ein Metallteil zu Nutze gemacht. Ätzverfahren sowie die Verwendung von Ätzverfahren zur Bearbeitung von Metallteilen sind dem Fachmann bekannt. Der Fachmann ist dabei in der Lage, die Art des Ätzmittels und/oder die Konzentration und/oder die Dauer des Ätzverfahrens auszuwählen, um eine spezifische korrosive Wirkung des Ätzmittels auf das Metallteil zu erzielen. Es hat sich dabei überraschend gezeigt, dass sich ein Ätzverfahren besonders gut zur Strukturierung der Oberfläche der Membran gemäß dem erfindungsgemäßen Verfahren eignet, da eine dementsprechend erhältliche Membran eine stark erhöhte Durchtrittsrate des Wasserstoffs zeigt. Es wird angenommen, dass die vorteilhafte Wirkung des Ätzverfahrens darin liegt, dass die Membran durch das Ätzverfahren im Mikrometer-Bereich strukturiert wird und die Oberfläche die in Kontakt mit dem Rohgas steht sich stark erhöht.

In einer Ausführungsform, ist das Ätzverfahren ein nasschemisches Ätzverfahren. Nasschemische Ätzverfahren sind dem Fachmann bekannt. Bei nasschemischen Ätzverfahren wird ein Metallteil in ein chemisches Bad aus einem Ätzmittel eingetaucht, Tauchätzen, oder mit einem flüssigen Ätzmittel besprüht. Vorteilhaft daran ist, dass das Metallteil gleichmäßig mit dem Ätzmittel in Kontakt kommt und dadurch eine gleichmäßig strukturierte Oberfläche nach dem Ätzverfahren aufweist. Beim Tauchätzen wird das Metallteil in Kontakt mit unverbrauchtem Ätzmittel gehalten. Dem Fachmann sind Methoden dazu bekannt. Dies kann durch die Verwendung eines Bewegungsbades, wie eines Rüttel- oder Schwenkbades, geschehen, da das Ätzmittel so in Bewegung gehalten wird und sich durchmischt. Es ist auch möglich das Ätzmittel durch eine Pumpe in Bewegung zu halten. So ist es auch möglich, verbrauchtes Ätzmittel aus dem Bad zu entfernen und unverbrauchtes Ätzmittel dem Bad hinzuzufügen. Ein nasschemisches Ätzverfahren, wie Tauchätzen, kann mit einem elektrolytischen Ätzverfahren kombiniert werden. Bei elektrolytischen Ätzverfahren fungiert das Metallteil als Anode. Zwischen dem Metallteil und einer Kathode wird eine Spannung, wie eine Gleichspannung, sodass ein Strom, wie ein Gleichstrom, zwischen Metallteil und Kathode fließt. Metallteil und Kathode befinden sich dabei in einem Ätzmittel. Durch die angelegte Spannung gehen aus dem Metallteil positiv geladene Metallionen in das Ätzmittel über und es kommt zu einem Materialabtrag an dem Metallteil. Dem Fachmann sind elektrolytische Ätzverfahren bekannt.

Es hat sich dabei gezeigt, dass die mit derartigen nasschemischen Ätzverfahren bearbeitete semipermeable Membran eine hohe Durchtrittsrate von hochreinem Wasserstoff aufweist. Dies könnte daran liegen, dass durch das nasschemische Ätzverfahren das Strukturieren der Oberfläche der Membran sehr gleichmäßig und vollständig geschieht. Vorteilhaft daran ist, dass die Durchtrittsdicke des Wasserstoffs durch die Membran gleichmäßig auf der vollständigen Oberfläche der Membran sich verringert, sowie die Oberfläche der Membran, die in Kontakt mit dem Rohgas steht, sich gleichmäßig auf der vollständigen Oberfläche der Membran erhöht.

In einer Ausführungsform des erfindungsgemäßen Verfahrens zur Bearbeitung einer semipermeablen Membran wird in einem ersten Ätzgang des Ätzverfahrens mindestens ein Primärkrater, wie eine Vielzahl an Primärkratern, in mindestens eine Oberfläche der semipermeablen Membran geätzt. Es wurde erkannt, dass durch die Primärkrater, die Durchtrittsdicke des Wasserstoffs durch die Membran sich verringert, sowie gleichzeitig die Oberfläche der Membran, die in Kontakt mit dem Rohgas steht, sich erhöht und die Durchtrittsrate des Wasserstoffs sich noch weiter erhöht. Es hat sich dabei als vorteilhaft gezeigt, dass der Durchmesser der Primärkrater auf der Oberfläche der Membran 2 bis 50 µm beträgt. Der Vorteil könnte darin liegen, dass so eine große Anzahl an Primärkratern in die Oberfläche der Membran geätzt wird. Es hat sich dabei außerdem als vorteilhaft erwiesen, in dem ersten Ätzgang des Ätzverfahrens die Primärkrater mit einer Dichte von 20 Primärkratern bis 1000 Primärkratern pro cm² in die Oberfläche der Membran zu ätzen. In einer Ausführungsform ist im Wesentlichen die gesamte Oberfläche der Membran mit Primärkratern bedeckt und im Wesentlichen kein Bereich der Oberfläche der Membran nicht mit einem Primärkrater bedeckt. Es wurde erkannt, dass so die Oberfläche der Membran, die in Kontakt mit dem Rohgas steht, sich weiter erhöht und so der zur Verfügung stehende Platz auf der Oberfläche der Membran optimal ausgenutzt ist.

In einer Ausführungsform des erfindungsgemäßen Verfahrens zur Bearbeitung einer semipermeablen Membran, umfasst das Ätzverfahren mehrere Ätzgänge von mindestens zwei Ätzgängen, wie mindestens drei Ätzgänge oder mindestens vier Ätzgänge, wobei der erste Ätzgang des Verfahrens mit einem ersten Ätzmittel, wie einer ersten Säure, durchgeführt wird und jeder weitere Ätzgang des Verfahrens mit einem weiteren Ätzmittel, wie einer weiteren Säure, durchgeführt wird, das mit dem in dem ersten Ätzgang verwendeten Ätzmittel, wie der im ersten Ätzgang verwendeten Säure, identisch ist oder unterscheidet, insbesondere durch die Konzentration und/oder die Art des verwendeten Ätzmittels, wie durch die Konzentration und/oder die Art der verwendeten Säure.

Es hat sich als vorteilhaft gezeigt, dass das Ätzverfahren mehrere Ätzgänge aufweist, da das Ätzmittel eines zweiten Ätzgangs, wie das Ätzmittel eines dritten Ätzgangs oder eines vierten Ätzgangs, in dem zweiten Ätzgang verstärkt an dem Ort auf der Oberfläche der Membran seine korrosive Wirkung entfaltet, an dem das Ätzmittel eines ersten Ätzgangs in dem ersten Ätzgang seine korrosive Wirkung entfaltet hat. Das heißt, dass das Ätzmittel eines zweiten Ätzgangs in dem zweiten Ätzgang an dem Ort auf der Oberfläche der Membran nur eine verringerte korrosive Wirkung entfaltet, an dem das Ätzmittel eines ersten Ätzgangs in dem ersten Ätzgang seine korrosive Wirkung nicht entfaltet hat. Vorteilhaft daran ist, dass dadurch, das erfindungsgemäße Verfahren steuerbar ist und die Oberfläche der erfindungsgemäßen Membran sehr gezielt strukturiert wird. Dies ist von Vorteil, da derart die Durchtrittsrate des Wasserstoffs durch die Membran gezielt sich erhöht.

Dem Fachmann ist die Verwendung von mehreren Ätzgängen in einem Ätzverfahren bekannt. Nach einem ersten Ätzgang und vor einem zweiten Ätzgang kann das Metallteil gereinigt werden, um Reste des Ätzmittels des ersten Ätzgangs zu entfernen. Das Metallteil kann aber auch ungereinigt in dem zweiten Ätzgang verwendet werden. Gleiches gilt für mögliche weitere Ätzgänge.

Dem Fachmann sind geeignete Arten von Ätzmittel, wie Säuren, bekannt. Ätzmittel können aus mehr als einem gelösten Stoff bestehen. Ätzmittel können auch aus einem einzelnen gelösten Stoff, wie zum Beispiel einer einzelnen Säure oder einer einzelnen Base bestehen. Eine bekannte Base, die als Ätzmittel verwendet werden kann, ist Natronlauge. Besonders gut geeignete Ätzmittel zur Bearbeitung von Metallteilen sind Säuren, da sie eine korrosive Wirkung auf viele Metalle haben. Es können organische oder anorganische Säuren als Ätzmittel verwendet werden. Bevorzugt werden jedoch anorganische Säuren als Ätzmittel verwendet. Geeignete anorganische Säuren sind unter anderem Phosphorsäure, Salpetersäure, Schwefelsäure, Borsäure oder Flusssäure. In einer Ausführungsform ist das Ätzmittel Salzsäure.

Bei dem Einsatz einer Säure, wie einer anorganischen Säure, z.B. Salzsäure nimmt die Konzentration bei jedem weiteren Ätzgang ab. Üblicherweise verkürzt sich dabei Zeit des Ätzvorgangs. D.h., es treten größere Krater bei geringerer Konzentration des Ätzmittels auf.

In einer Ausführungsform des erfindungsgemäßen Verfahrens zur Bearbeitung einer semipermeablen Membran, wird in einem zweiten Ätzgang mindestens ein Sekundärkrater, wie zwei oder drei Sekundärkrater, zumindest teilweise, innerhalb des Primärkraters geätzt, wobei der Durchmesser des mindestens einen Sekundärkraters kleiner ist, als der Durchmesser des Primärkraters. Mit anderen Worten: in dem Primärkrater befindet sich, zumindest teilweise, mindestens ein Sekundärkrater und der Primärkrater weist einen größeren Durchmesser auf als der Sekundärkrater. Es hat sich dabei als vorteilhaft gezeigt, dass sich so die Durchtrittsrate des Wasserstoffs durch die Membran erhöht. Dies könnte daran liegen, dass die Durchtrittsdicke des Wasserstoffs durch die Membran sich weiter verringert und die die Oberfläche der Membran die in Kontakt mit dem Rohgas steht sich weiter erhöht. Gleichzeitig wird der zur Verfügung stehende Platz auf der Oberfläche der Membran ausgenutzt. Es hat sich dafür als besonders vorteilhaft erwiesen, dass der Durchmesser des Sekundärkraters 0,5 bis 30 µm ist. Dem Fachmann ist dabei bekannt, dass bei einem Ätzverfahren mit zwei Ätzgängen, das Ätzmittel eines zweiten Ätzgangs im Wesentlichen an dem Ort auf der Oberfläche der Membran seine korrosive Wirkung entfaltet, an dem das Ätzmittel eines ersten Ätzgangs in dem ersten Ätzgang seine korrosive Wirkung entfaltet. Der Fachmann ist in der Lage dies auszunutzen, um einen Sekundärkrater, zumindest teilweise, innerhalb, eines Primärkraters zu ätzen. Zum einen ist der Fachmann ist in der Lage ein entsprechendes zweites Ätzmittel, wie eine zweite Säure, für den zweiten Ätzgang auszuwählen, um dieses Ziel zu erreichen. Dabei ist der Fachmann in der Lage das zweite Ätzmittel, wie die zweite Säure, anhand der Art und/oder der Konzentration des Ätzmittels, wie anhand der Art und/oder der Konzentration der Säure, auszuwählen. Sofern das Ätzmittel eine Säure ist, kann der Fachmann eine geeignete Säure zusätzlich anhand der Säurestärke auswählen. Der Fachmann ist in diesem Fall in der Lage die Säurestärke am pKs-Wert abzuschätzen. Der Fachmann ist zum anderen in der Lage die Dauer des zweiten Ätzgangs auszuwählen, um dieses Ziel zu erreichen.

In einer Ausführungsform des erfindungsgemäßen Verfahrens zur Bearbeitung einer semipermeablen Membran, wird in einem dritten Ätzgang zumindest ein Tertiärkrater, wie zwei oder drei Tertiärkrater, zumindest teilweise, innerhalb des Sekundärkraters oder des Primärkraters geätzt, wobei der Durchmesser des Tertiärkraters kleiner ist, als der Durchmesser des Sekundärkraters oder des Primärkraters. Mit anderen Worten: auf mindestens einer Oberfläche der Membran befindet sich nach einem solchen Ätzverfahren mindestens ein Primärkrater in dem sich, zumindest teilweise, ein Sekundärkrater befindet und in diesem Sekundärkrater befindet sich, zumindest teilweise, ein Tertiärkrater. Es ist auch möglich, dass in dem Primärkrater sich, zumindest teilweise, ein Tertiärkrater befindet. Es hat sich dabei als vorteilhaft gezeigt, dass so die Durchtrittsrate des Wasserstoffs durch die Membran sich vorteilhafterweise im Vergleich zu einer Membran, in die in einem zweiten Ätzgang ein Sekundärkrater, zumindest teilweise, innerhalb eines Primärkraters geätzt wird, sich erhöht. Dies könnte daran liegen, dass die Durchtrittsdicke des Wasserstoffs durch die Membran sich noch weiter verringert und die Oberfläche der Membran, die in Kontakt mit dem Rohgas steht, sich noch weiter erhöht. Gleichzeitig wird der zur Verfügung stehende Platz auf der Oberfläche der Membran noch besser ausgenutzt. Es hat sich dafür als besonders vorteilhaft erwiesen, dass der Durchmesser des Tertiärkraters 0,1 bis 20 µm ist.

Dem Fachmann ist dabei bekannt, dass bei einem Ätzverfahren mit drei Ätzgängen, das Ätzmittel eines dritten Ätzgangs im Wesentlichen an dem Ort auf der Oberfläche der Membran seine korrosive Wirkung entfaltet, an dem das Ätzmittel eines zweiten Ätzgangs in dem zweiten Ätzgang seine korrosive Wirkung entfaltet. Der Fachmann ist in der Lage dies auszunutzen, um einen Tertiärkrater, zumindest teilweise, innerhalb, eines Sekundärkraters zu ätzen. Auch dabei ist der Fachmann in der Lage das dritte Ätzmittel, wie die dritte Säure, anhand der Art und/oder der Konzentration des Ätzmittels, wie anhand der Art und/oder der Konzentration der Säure, auszuwählen. Der Fachmann ist zum anderen in der Lage die Dauer des dritten Ätzgangs auszuwählen, um dieses Ziel zu erreichen.

In einem weiteren Aspekt, umfasst die vorliegende Erfindung eine semipermeable Membran aus einem für Wasserstoff durchlässigen Eisen oder eisenhaltigen Metalllegierung zur Gewinnung von hochreinem Wasserstoff aus einem Rohgas, wobei die Membran mindestens eine Oberfläche aufweist, die gemäß dem erfindungsgemäßen Verfahren zur Bearbeitung einer semipermeablen Membran strukturiert ist.

Es hat sich überraschend gezeigt, dass die erfindungsgemäße Membran, insbesondere auch ohne eine anfängliche Bestromung und/oder ohne eine anfängliche Erwärmung, eine vergleichbar hohe Durchtrittsrate von Wasserstoff wie eine herkömmliche Membran nach dem Stand der Technik aufweist. Es wurde erkannt, dass sich auf der erfindungsgemäßen Membran kein Ruß niederschlägt und, dass die Membran eine gleichbleibend hohe Durchtrittsrate des Wasserstoffs aufweist.

In einer Ausführungsform, besteht das für Wasserstoff durchlässige Eisen aus Roheisen, bevorzugt aus ferritischem Eisen. Es hat sich gezeigt, dass ein hoher Eisenanteil vorteilhaft für die Durchtrittsrate des Wasserstoffs durch die Membran ist. In einer Ausführungsform besteht das Eisen aus Reineisen. Reineisen, weist einen besonders hohen Eisengehalt im Vergleich zu Roheisen oder ferritischem Eisen auf.

In einer Ausführungsform ist die Oberfläche der erfindungsgemäßen Membran, die in Kontakt mit dem Rohgas steht, gemäß dem erfindungsgemäßen Verfahren zur Bearbeitung einer semipermeablen Membran strukturiert.

In einer Ausführungsform der erfindungsgemäßen Membran, ist die Membran als in Umfangsrichtung endloses Rohr ausgebildet. Dies hat sich als vorteilhaft erwiesen, da sich so die Oberfläche der Membran, die in Kontakt mit dem Rohgas steht, vergrößert.

In einer Ausführungsform der erfindungsgemäßen Membran ist die Oberfläche, die die Innenseite des Rohrs und die Oberfläche, die die Außenseite des Rohrs ausbilden, durch das erfindungsgemäße Verfahren zur Bearbeitung einer semipermeablen Membran strukturiert. Es hat sich als vorteilhaft erwiesen, beide Oberflächen der als Rohr ausgebildeten Membran zu strukturieren, da so die Durchtrittsdicke des Wasserstoffs sich weiter verringert und sich die Oberfläche der Membran, die in Kontakt mit dem Rohgas steht, weiter erhöht.

In einem weiteren Aspekt, umfasst die vorliegende Erfindung die Verwendung einer erfindungsgemäßen Membran oder einer Membran, erhältlich gemäß einem erfindungsgemäßen Verfahren zur Bearbeitung einer semipermeablen Membran, zur Gewinnung von hochreinem Wasserstoff durch die Abscheidung von Wasserstoff aus einem Rohgas. Es hat sich gezeigt, dass die Verwendung einer derartigen Membran, insbesondere auch ohne eine anfängliche Bestromung und/oder ohne eine anfängliche Erwärmung, eine vergleichbar hohe Durchtrittsrate von Wasserstoff wie die Verwendung einer herkömmlichen Membran nach dem Stand der Technik aufweist. Dabei hat es sich als vorteilhaft herausgestellt, dass bei der Verwendung der Membran, insbesondere ohne anfängliche Bestromung und/oder ohne anfängliche Erwärmung, kein oder weniger Ruß auf der Membran sich niederschlägt und dass die Membran eine gleichbleibend hohe Durchtrittsrate des Wasserstoffs aufweist.

In einem weiteren Aspekt, umfasst die vorliegende Erfindung ein Verfahren, mit dem Schritt der Abscheidung von hochreinem Wasser aus einem Rohgas, zur Gewinnung von hochreinem Wasserstoff aus einem Rohgas, unter Verwendung einer erfindungsgemäßen semipermeablen Membran oder einer semipermeablen Membran erhältlich gemäß dem erfindungsgemäßen Verfahren zur Bearbeitung einer semipermeablen Membran.

Es ist von Vorteil, dass das erfindungsgemäße Verfahren zur Gewinnung von hochreinem Wasserstoff, insbesondere auch ohne eine anfängliche Bestromung und/oder ohne eine anfängliche Erwärmung der Membran, eine vergleichbar hohe Durchtrittsrate von Wasserstoff wie ein Verfahren nach dem Stand der Technik aufweist. Es hat sich gezeigt, dass bei dem erfindungsgemäßen Verfahren zur Gewinnung von hochreinem Wasserstoff, sich kein oder weniger Ruß auf der Membran niederschlägt und dass die Membran eine gleichbleibend hohe Durchtrittsrate des Wasserstoffs aufweist. Es wurde festgestellt, dass der Wirkungsgrad des erfindungsgemäßen Verfahrens zur Gewinnung von hochreinem Wasserstoff sich nicht verringert.

In einer Ausführungsform des Verfahrens zur Gewinnung von hochreinem Wasserstoff aus Rohgas wird vor dem Einbringen des Rohgases dieses Rohgas von Feuchtigkeit, teerartigen, öligen oder fettigen Komponenten abgereichert.

In einer Ausführungsform des Verfahrens zur Gewinnung von hochreinem Wasserstoff aus Rohgas wird die Seite der semipermeablen Membran, die mit dem Rohgas in Kontakt kommt, bei einer Bestromung mit Erwärmung der Membran mit einer Gasmischung umfassend Wasserstoff und Stickstoff oder mit im wesentlichen Wasserstoff in Kontakt gebracht. Dieses erlaubt die Reduktion der Reaktion der Gaskomponenten der Gase einschließlich des anschließenden Rohgases untereinander und ein Zersetzen der Mischgase, wobei eine Rußabscheidung erfolgen kann.

In einem weiteren Aspekt umfasst die vorliegende Erfindung eine Vorrichtung zur Gewinnung von hochreinem Wasserstoff aus Rohgas mit einem Druckgefäß und Zu- und Ableitungen für das Rohgas bzw. dem Wasserstoff abgereicherten Rohgas, einem im Innenraum des Druckgefäßes angeordneten Innenbereich, der vollständig gegenüber dem Innenraum des Druckgefäßes abgeschlossen ist und dieser Innenbereich zumindest teilweise mit einer semipermeablen Membran zum Innenraum des Druckgefäßes abgegrenzt ist, wobei diese semipermeable Membran durchlässig ist für Wasserstoff, zur Abscheidung von hochreinem Wasserstoff aus dem Rohgas, dadurch gekennzeichnet, dass die semipermeable Membran eine erfindungsgemäße ist oder erhältlich ist gemäß einem erfindungsgemäßen Verfahren zur Bearbeitung einer semipermeablen Membran.

Es hat sich als vorteilhaft gezeigt, dass die erfindungsgemäße Vorrichtung, insbesondere auch ohne eine anfängliche Bestromung und/oder ohne eine anfängliche Erwärmung der Membran, eine vergleichbar hohe Durchtrittsrate von Wasserstoff wie eine Vorrichtung nach dem Stand der Technik aufweist. Es hat sich gezeigt, dass bei der erfindungsgemäßen Vorrichtung, kein oder weniger Ruß auf der Membran sich niederschlägt und dass die Membran eine gleichbleibend hohe Durchtrittsrate des Wasserstoffs aufweist. Es wurde festgestellt, dass sich der Wirkungsgrad der erfindungsgemäßen Vorrichtung nicht verringert.

In einer Ausführungsform der erfindungsgemäßen Vorrichtung, herrscht in dem Innenraum des Druckgefäßes ein Überdruck und/oder in dem Innenbereichs des Druckgefäßes ein Unterdruck. Es zeigte sich aber, dass das erfindungsgemäße Verfahren und die erfindungsgemäße Vorrichtung kein Unterdruck auf der Seite der Wasserstoffabscheidung benötigen.

In einer Ausführungsform ist die im Verfahren zur Gewinnung von Wasserstoff aus Rohgas eingesetzte semipermeable Membran weiterhin nach dem erfindungsgemäßen Strukturieren der Membran einer weiteren Behandlung unterworfen, bei der eine Graphenschicht auf mindestens einer Oberfläche der semipermeablen Membran ausgebildet wird. Eine solche Graphenschicht schützt die dem Rohgas zugewandte Oberfläche vor negative Einflüsse, wie Korrosion etc. Geeignete Verfahren sind dem Fachmann grundsätzlich bekannt, insbesondere erfolgt dieses durch ein Einleiten von kohlenstoffhaltigem Gas, wobei hier bevorzugt z.B. durch Bestromung die Membran auf Temperaturen von 400°C bis 1.100°C aufgeheizt wird. Alternativ kann eine Ausbildung der Graphenschicht durch Auftragen geeigneter Suspensionen enthaltend Graphen, erfolgen. Dieser Vorgang kann wiederholt werden, um eine mehrlagige Schicht auszubilden.

Entsprechende Membranen mit einer Graphenschicht zumindest auf der dem Rohgas zugewandten Seite, können in einer Ausführungsform in einer erfindungsgemäßen Vorrichtung vorliegen.

In einer Ausführungsform der erfindungsgemäßen Vorrichtung, ist die strukturierte semipermeable Membran, zumindest zeitweise, bestrombar ausgebildet.

Es wurde beobachtet, dass durch die zeitweise Bestromung der erfindungsgemäßen Membran die Durchtrittsrate des Wasserstoffs durch die Membran sich erhöht im Vergleich zu einer erfindungsgemäßen Membran die nicht, auch nicht zeitweise, bestromt ist. Es ist jedoch klar, dass die Bestromung nicht zwingend erforderlich für den Durchtritt des Wasserstoffs durch die Membran ist. Der Wasserstoff tritt somit auch ohne die Bestromung durch die Membran hindurch. Es ist auch klar, dass die Membran nicht für so eine lange Dauer wie im Stand der Technik bestromt werden muss, damit die Durchtrittsrate des Wasserstoffs sich erhöht. Die Membran kann durch das Anbringen von elektrischen Kontakten und das Anlegen einer elektrischen Spannung an die Kontakte bestrombar ausgebildet sein. Die elektrische Spannung kann dabei eine Gleichspannung oder eine Wechselspannung sein.

In einer Ausführungsform der erfindungsgemäßen Vorrichtung, ist die strukturierte semipermeable Membran, zumindest zeitweise, beheizbar ausgebildet.

Schließlich kann das erfindungsgemäße Verfahren derart durchgeführt werden, dass der Innenraum der Vorrichtung mit der semipermeablen Membran mit Licht angestrahlt wird. Dieses liegt ist üblicherweise eines im Bereich von 300 nm bis 900 nm. Durch die Bestrahlung der Membran mit Licht ist eine weitere Steigerung des Umsatzes der Wasserstoffseparation möglich. Entsprechend kann eine erfindungsgemäße Vorrichtung eine Bestrahlungsquelle zum Bestrahlen der semipermeablen Membran aufweisen. Als Bestrahlungsquellen eignen sich übliche Quellen die im genannten Bereich strahlen.

Bevorzugte Ausführungsformen der Erfindung werden nachfolgend anhand der Zeichnungen näher erläutert. Hierbei zeigen die Figuren folgendes:
Fig.1: Fig. 1 zeigt ein Fließdiagramm eines erfindungsgemäßen Verfahrens zur Bearbeitung einer semipermeablen Membran.
Fig. 2: Fig. 2 zeigt eine schematische Darstellung einer bereitgestellten Membran und einer bearbeiteten Membran.
Fig. 3: Fig. 3 zeigt eine schematische Darstellung von Membranen, erhältlich gemäß dem in Fig. 1 dargestellten Verfahren, wenn es sich bei dem materialabtragenden Verfahren um ein Ätzverfahren handelt.
Fig. 4: Fig. 4 zeigt eine schematische Darstellung einer Membran nach zwei Ätzgängen, erhältlich gemäß dem in Fig. 1 dargestellten Verfahren, wenn es sich bei dem materialabtragenden Verfahren um ein Ätzverfahren, umfassend zwei Ätzgänge, handelt.
Fig. 5: Fig. 5 zeigt eine schematische Darstellung einer Membran nach drei Ätzgängen, erhältlich gemäß dem in Fig. 1 dargestellten Verfahren, wenn es sich bei dem materialabtragenden Verfahren um ein Ätzverfahren, umfassend drei Ätzgänge, handelt.
Fig. 6: Fig. 6 zeigt die Ausbildung der kraterartigen Strukturen nach einem einmaligen Ätzgang mit Hilfe der von Rasterelektronenmikroskopie Aufnahme.

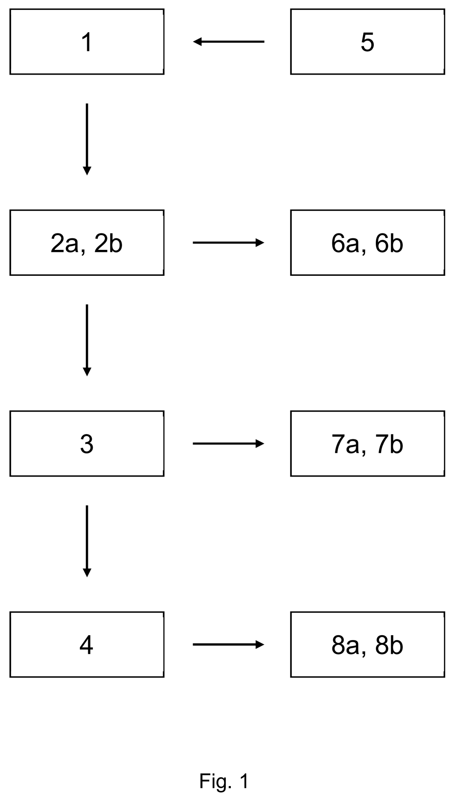

Die Fig. 1 zeigt ein Fließdiagramm eines erfindungsgemäßen Verfahrens zur Bearbeitung einer semipermeablen Membran. Das Verfahren umfasst den Schritt Bereitstellen einer Membran 1. **In** einem weiteren Schritt wird die Oberfläche der bereitgestellten Membran 5 mit einem materialabtragenden Verfahren strukturiert 2a. Gemäß dem Verfahren ist eine Membran mit strukturierter Oberfläche 6a erhältlich. Wenn es sich bei dem materialabtragendem Verfahren um ein Ätzverfahren handelt, kann das erfindungsgemäße Verfahren neben einem ersten Ätzgang 2b, einen zweiten Ätzgang 3 und einen dritten Ätzgang 4 umfassen. Umfasst das Verfahren einen ersten Ätzgang 2b, so ist eine Membran nach einem ersten Ätzgang 6b erhältlich. Umfasst das Verfahren einen zweiten Ätzgang 3, so ist eine Membran nach einem zweiten Ätzgang 7a, 7b erhältlich. Umfasst das Verfahren einen dritten Ätzgang 4, so ist eine Membran nach einem dritten Ätzgang 8a, 8b erhältlich.

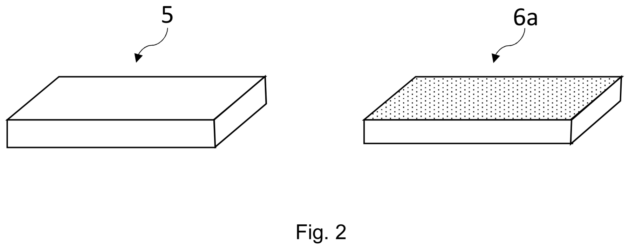

In der Fig. 2 ist eine schematische Darstellung einer nicht bearbeiteten, bereitgestellten Membran 5 und einer Membran mit einer strukturierten Oberfläche 6a dargestellt.

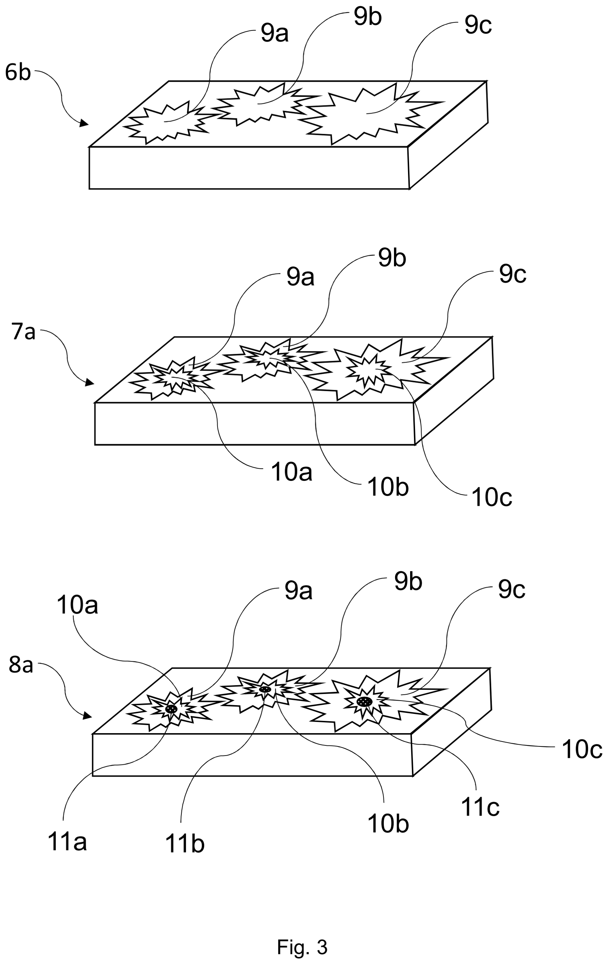

Die Fig. 3 zeigt eine schematische Darstellung von Membranen erhältlich gemäß dem in Fig. 1 dargestellten Verfahren, wenn es sich bei dem materialabtragenden Verfahren um ein Ätzverfahren handelt. Die Membran nach dem ersten Ätzgang 6b weist Primärkrater 9a, 9b, 9c auf. Die Membran nach dem zweiten Ätzgang 7a weist Primärkrater 9a, 9b, 9c und Sekundärkrater 10a, 10b, 10c auf. Die Membran nach dem dritten Ätzgang 8a weist Primärkrater 9a, 9b, 9c Sekundärkrater 10a, 10b, 10c und Tertiärkrater 11a, 11b, 11c auf. Zum Zwecke der Darstellung liegt in der Fig. 3 ein Sekundärkrater 10 in einem Primärkratern 9 und ein Tertiärkrater 11 in einem Sekundärkrater 10. Es ist klar ersichtlich, dass Form, Dichte und Durchmesser der Krater lediglich schematisch dargestellt sind. Dies gilt auch für die folgenden Figuren.

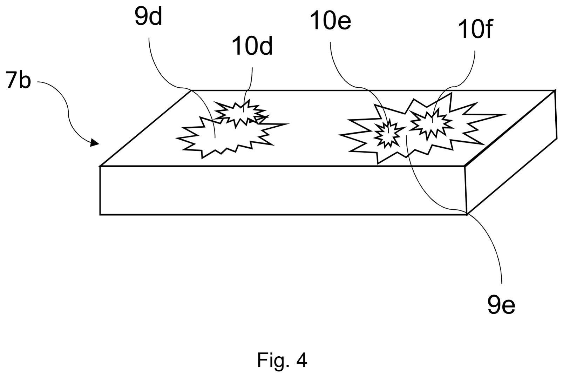

In Fig. 4 ist eine schematische Darstellung einer weiteren Membran nach zweitem Ätzgang 7b, erhältlich gemäß dem in Fig. 1 darstellten Verfahren, wenn es sich bei dem Verfahren um ein Ätzverfahren, umfassend einen ersten Ätzgang 2b und einen zweiten Ätzgang 3, handelt, zu sehen. Es wird ersichtlich, dass ein Sekundärkrater 10d auch nur teilweise in einem Primärkrater 9d sich befinden kann. Außerdem wird klar, dass auch mehr als ein Sekundärkrater 10, wie zwei Sekundärkrater 10e, 10f, in einem Primärkrater 9e sich befinden kann.

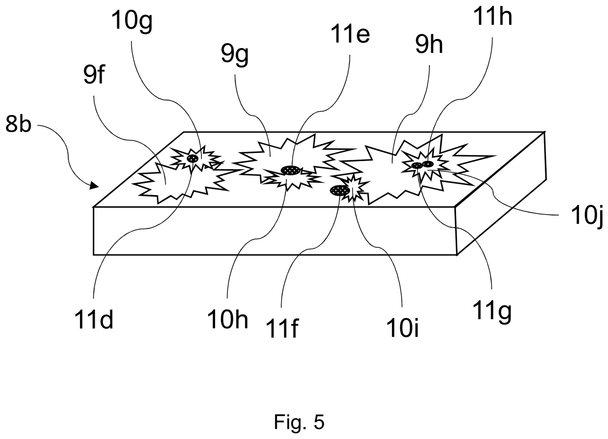

Die Fig. 5 zeigt eine schematische Darstellung einer weiteren Membran nach drittem Ätzgang 8b, erhältlich gemäß dem in Fig. 1 dargestellten Verfahren, wenn es sich bei dem Verfahren um ein Ätzverfahren, umfassend einen ersten Ätzgang 2b, einen zweiten Ätzgang 3 und einen dritten Ätzgang 4 handelt. Es wird klar ersichtlich, dass ein Tertiärkrater 11d innerhalb eines Sekundärkraters 10g sich befinden kann, wobei der Sekundärkrater 10g sich teilweise innerhalb eines Primärkraters 9f befinden kann. Weiterhin ist zu erkennen, dass ein Tertiärkrater 11e, der sich teilweise innerhalb eines Sekundärkraters 10h befindet, gleichzeitig auch teilweise in einem Primärkrater 9g sich befinden kann. Ein Tertiärkrater 11f, der sich teilweise innerhalb eines Sekundärkraters 10i befindet, kann auch gleichzeitig nicht in einem Primärkrater sich befinden. Es wird ebenfalls, ersichtlich, dass in einem Sekundärkrater 10j sich mehr als ein Tertiärkrater 11, wie zwei Tertiärkrater 11g, 11h, befinden kann.

### Ausführungsbeispiel

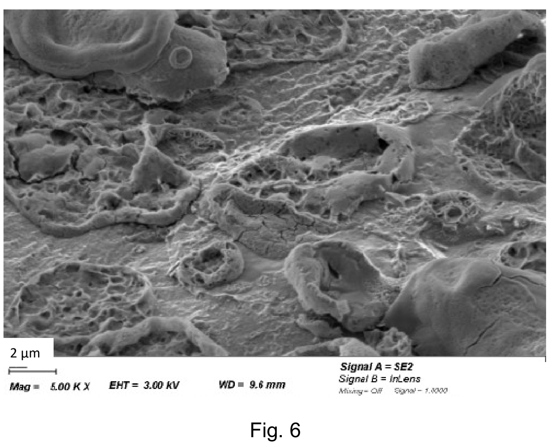

In einem Ausführungsbeispiel wurde ein Rohrstück aus Reineisen als semipermeable Membran bereitgestellt und für 10 Tage in einem ersten Ätzgang bearbeitet. Dazu wurde das Rohrstück in ein chemisches Bad gelegt. Als Ätzmittel wurde verdünnte Salzsäure eingesetzt. Das Ätzmittel wurde durch eine Umlaufspülung in Bewegung gehalten, damit die Innenseite und die Außenseite des Rohrstücks gleichmäßig mit dem Ätzmittel in Kontakt kommen. Nach dem ersten Ätzgang wurde ein zweiter Ätzgang durchgeführt. Als Ätzmittel wurde dabei eine Salzsäure mit einer niedrigeren Konzentration als in dem ersten Ätzgang mit einer verkürzten Ätzzeit verwendet. Nach den beiden Ätzgängen wies die semipermeable Membran Primär- und Sekundärkrater auf. Fig.6. zeigt beispielhaft die Oberfläche nach dem ersten Ätzgang.

Die derart bearbeitete Membran wurde in einem Wasserstoff-Separator getestet. Als Vergleich diente eine semipermeable Membran gemäß dem Stand der Technik mit glatter, unstrukturierter Oberfläche. Beide Membranen wurden mit einem Mischgas aus Stickstoff und Wasserstoff jeweils 50 Vol. % mit einem Druck von 4 bar (0,4 MPa) beaufschlagt. Das separierte reine Wasserstoffgas wurde aus dem Rohrinneren in einem Druckbehälter gesammelt und der Druckanstieg von einem Drucksensor mit PC-Schnittstelle erfasst und aufgezeichnet. Im Gegensatz zur Membran nach dem Stand der Technik startete die erfindungsgemäße Membran schon bei Raumtemperatur ohne anfängliche Bestromung und anfängliche Erwärmung und ohne Beaufschlagung des Rohrinneren mit einem Vakuum mit dem Separationsprozess. Dies zeigte sich durch das Entstehen eines 50 mbar Überdrucks in dem Druckbehälter. Bei der Membran nach dem Stand der Technik konnte dies hingegen nicht beobachtet werden. Anschließend wurde das Rohrinnere mit einem Vakuum zwischen 65 und 95 % (absoluter Druck von 0,35 bar und 0,05 bar) beaufschlagt und beide Membranen durch Anlegen einer Spannung beheizt. Es wurde beobachtet, dass der Umsatz des separierten Wasserstoffs bei der Verwendung der erfindungsgemäßen Membran 100% betrug. Es konnte somit der gesamte Wasserstoff aus dem Mischgas durch die Abscheidung durch die Membran gewonnen werden. Zur Erreichung dieses Ergebnisses musste die erfindungsgemäße Membran lediglich auf eine Temperatur von 250°C beheizt werden. Bei dieser Temperatur glühte die erfindungsgemäße Membran nicht. Bei der Verwendung einer Membran nach dem Stand der Technik konnte lediglich ein Umsatz des separierten Wasserstoffs von 50% beobachtet werden. Dazu war es jedoch notwendig die Membran nach dem Stand der Technik auf eine viel höhere Temperatur von 750°C zu beheizen. Dabei wurde das Rotglühen und beginnende Weißglühen der Membran beobachtet. In beiden Fällen wies der gewonnene Wasserstoff zwar eine Reinheit von 99,997% auf. Bei der Verwendung der erfindungsgemäßen Membran konnte jedoch doppelt so viel des hochreinen Wasserstoffs gewonnen werden, wobei die erfindungsgemäße Membran sehr viel weniger beheizt werden musste.

Nach der Beendigung des Separationsprozesses gelang der erneute Start des Separationsprozesses bei Verwendung der erfindungsgemäßen Membran komplett ohne erneute Bestromung und Erwärmung. Der Separationsprozess nach diesem Kaltstart zeigte dabei gleich gute Ergebnisse wie nach dem Start des Separationsprozesses mit anfänglicher Bestromung und Erwärmung. Der Start des Separationsprozesses bei Verwendung einer Membran nach dem Stand der Technik gelang hingegen nicht ohne eine anfängliche Bestromung und Erwärmung.

### Bezugszeichenliste

- 1: Bereitstellen einer Membran
- 2a: Strukturieren der Membranoberfläche mit materialabtragendem Verfahren
- 2b: Erster Ätzgang
- 3: Zweiter Ätzgang
- 4: Dritter Ätzgang
- 5: Bereitgestellte Membran
- 6a: Membran mit strukturierter Oberfläche
- 6b: Membran nach erstem Ätzgang
- 7a, 7b: Membran nach zweitem Ätzgang
- 8a, 8b: Membran nach drittem Ätzgang

- 9, 9a,..., 9h: Primärkrater
- 10, 10a,..., 10j: Sekundärkrater
- 11, 11a,..., 11h: Tertiärkrater

## Patentansprüche

1. Verfahren zur Bearbeitung einer semipermeablen Membran aus einem für Wasserstoff durchlässigen Eisen oder aus einer für Wasserstoff durchlässigen eisenhaltigen Metalllegierung geeignet zur Gewinnung von hochreinem Wasserstoff aus einem Rohgas, umfassend die Schritte:
a. Bereitstellen einer semipermeablen Membran aus einem für Wasserstoff durchlässigen Eisen oder aus einer für Wasserstoff durchlässigen eisenhaltigen Metalllegierung;
b. Strukturieren der Oberfläche der semipermeablen Membran mit einem materialabtragenden Verfahren, insbesondere Ätzverfahren.

2. Verfahren nach Anspruch 1, **dadurch gekennzeichnet, dass** das für Wasserstoff durchlässige Eisen oder die eisenhaltige Metalllegierung Roheisen, bevorzugt ferritisches Eisen, bevorzugter Reineisen enthält, insbesondere daraus besteht.

3. Verfahren nach einem der vorhergehenden Ansprüche, **dadurch gekennzeichnet, dass** die semipermeable Membran einseitig, insbesondere die Oberfläche der semipermeablen Membran, die eine Grenzfläche mit dem Rohgas bildet, durch das materialabtragende Verfahren strukturiert wird.

4. Verfahren nach einem der Ansprüche 1 oder 2, **gekennzeichnet durch** Strukturieren der Oberfläche der semipermeablen Membran, die eine Grenzfläche mit dem Rohgas bildet und der Oberfläche der semipermeablen Membran, die eine Grenzfläche mit dem hochreinen Wasserstoff bildet.

5. Verfahren nach einem der vorhergehenden Ansprüche, **dadurch gekennzeichnet, dass** das materialabtragende Verfahren ein Ätzverfahren, insbesondere ein nasschemisches Ätzverfahren, ist.

6. Verfahren nach Anspruch 5, **dadurch gekennzeichnet, dass** in einem ersten Ätzgang des Ätzverfahrens mindestens ein Primärkrater, insbesondere mit einem Durchmesser von 2 bis 50 µm, in eine Oberfläche der selektiv permeablen Membran geätzt wird, insbesondere, dass eine Vielzahl der Primärkrater in die Oberfläche der Membran geätzt wird, wie mit einer Dichte von 20 Primärkratern bis 1000 Primärkratern pro cm².

7. Verfahren nach einem der Ansprüche 5 oder 6, **dadurch gekennzeichnet, dass** das Ätzverfahren mehrere Ätzgänge von mindestens zwei Ätzgängen umfasst, wie mindestens drei Ätzgänge oder mindestens vier Ätzgänge, wobei der erste Ätzgang des Verfahrens mit einem ersten Ätzmittel, wie einer ersten Säure, durchgeführt wird und jeder weitere Ätzgang des Verfahrens mit einem weiteren Ätzmittel, wie einer weiteren Säure, durchgeführt wird, das mit dem in dem ersten Ätzgang verwendeten Ätzmittel, wie der im ersten Ätzgang verwendeten Säure, identisch ist oder sich von dem in dem ersten Ätzgang verwendeten Ätzmittel, wie der in dem ersten Ätzgang verwendeten Säure, unterscheidet, insbesondere durch die Konzentration und/oder die Art des verwendeten Ätzmittels, wie durch die Konzentration und/oder die Art der verwendeten Säure.

8. Verfahren nach Anspruch 7, **dadurch gekennzeichnet, dass** in einem zweiten Ätzgang ein Sekundärkrater, zumindest teilweise, innerhalb des Primärkraters geätzt wird, wobei der Durchmesser des Sekundärkraters kleiner ist als der Durchmesser des Primärkraters, insbesondere der Durchmesser des Sekundärkraters 0,5 bis 30 µm ist, insbesondere, **dadurch gekennzeichnet, dass** in einem dritten Ätzgang ein Tertiärkrater, zumindest teilweise, innerhalb des Sekundärkraters oder des Primärkraters geätzt wird, wobei der Durchmesser des Tertiärkraters kleiner ist als der Durchmesser des Sekundärkraters oder des Primärkraters, insbesondere der Durchmesser des Tertiärkraters 01 bis 20 µm ist.

9. Semipermeable Membran aus einem für Wasserstoff durchlässigen Eisen, bestehend aus Roheisen, bevorzugt aus ferritischem Eisen, bevorzugter aus Reineisen, zur Gewinnung von hochreinem Wasserstoff aus einem Rohgas, wobei die Membran mindestens eine Oberfläche aufweist, die gemäß eines Verfahrens nach einem der Ansprüche 1 bis 8 strukturiert ist, insbesondere die Oberfläche die in Kontakt mit dem Rohgas steht, bevorzugt, **dadurch gekennzeichnet, dass** die semipermeable Membran als in Umfangsrichtung endloses Rohr ausgebildet ist.

10. Semipermeable Membran nach Anspruch 9, **dadurch gekennzeichnet, dass** die Oberfläche, die die Innenseite des Rohrs und die Oberfläche, die die Außenseite des Rohrs ausbilden, durch das Verfahren nach einem der Ansprüche 1 bis 8 strukturiert sind.

11. Verwendung einer semipermeablen Membran nach einem der Ansprüche 9 oder 10 oder erhältlich durch ein Verfahren nach einem der Ansprüche 1 bis 8 zur Gewinnung von hochreinem Wasserstoff durch die Abscheidung von Wasserstoff aus einem Rohgas.

12. Verfahren zur Gewinnung von hochreinem Wasserstoff aus einem Rohgas mit dem Schritt der Abscheidung von hochreinem Wasserstoff aus einem Rohgas, unter Verwendung einer semipermeable Membran nach einem der Ansprüche 9 oder 10 oder dieser Membran erhältlich durch Verfahren nach einem der Ansprüche 1 bis 8 zur Abscheidung des Wasserstoffs, bevorzugt, wobei vor Einbringen des Rohgases dieses von Feuchtigkeit, teerartigen, öligen oder fettigen Komponenten abgereichert wird.

13. Vorrichtung zur Gewinnung von hochreinem Wasserstoff aus Rohgas mit einem Druckgefäß und Zu- und Ableitungen für das Rohgas bzw. dem Wasserstoff abgereicherten Rohgas, einem im Innenraum des Druckgefäßes angeordneten Innenbereich, der vollständig gegenüber dem Innenraum des Druckgefäßes abgeschlossen ist und dieser Innenbereich zumindest teilweise mit einer semipermeablen Membran zum Innenraum des Druckgefäßes abgegrenzt ist, wobei diese semipermeable Membran durchlässig ist für Wasserstoff, zur Abscheidung von hochreinem Wasserstoff aus dem Rohgas, **dadurch gekennzeichnet, dass** die semipermeable Membran eine ist nach einem der Ansprüche 9 oder 10 oder erhältlich durch ein Verfahren nach einem der Ansprüche 1 bis 8.

14. Vorrichtung zur Gewinnung von hochreinem Wasserstoff nach Anspruch 13, **dadurch gekennzeichnet, dass** die strukturierte semipermeable Membran, zumindest zeitweise, bestrombar ausgebildet ist.

15. Vorrichtung zur Gewinnung von hochreinem Wasserstoff nach einem der Ansprüche 13 oder 14, **dadurch gekennzeichnet, dass** die strukturierte semipermeable Membran, insbesondere durch elektrische Energie, zumindest zeitweise, beheizbar ausgebildet ist.
